(19) Europäisches Patentamt

European Patent Office

Office européen des brevets

(11) EP 0 772 761 B1

(12) EUROPÄISCHE PATENTSCHRIFT

(45) Veröffentlichungstag und Bekanntmachung des Hinweises auf die Patenterteilung:
**31.07.2002   Patentblatt 2002/31**

(51) Int Cl.7: **G01B 11/22**

(21) Anmeldenummer: **96917420.0**

(86) Internationale Anmeldenummer:
**PCT/EP96/02241**

(22) Anmeldetag: **24.05.1996**

(87) Internationale Veröffentlichungsnummer:
**WO 96/37754 (28.11.1996 Gazette 1996/52)**

(54) **VERFAHREN UND MESSGERÄT ZUR MESSUNG DER PROFILTIEFE EINES KRAFTFAHRZEUGREIFENS**

METHOD AND GAUGE FOR MEASURING THE SCULPTURE DEPTH OF A MOTOR VEHICLE TYRE

PROCEDE ET APPAREIL POUR MESURER LA PROFONDEUR DE SCULPTURE D'UN PNEU DE VEHICULE AUTOMOBILE

(84) Benannte Vertragsstaaten:
**AT BE CH DE DK ES FI FR GB GR IE IT LI LU MC NL PT SE**
Benannte Erstreckungsstaaten:
**LT LV SI**

(30) Priorität: **26.05.1995  DE 19519423**
**31.05.1995  DE 29508978 U**

(43) Veröffentlichungstag der Anmeldung:
**14.05.1997   Patentblatt 1997/20**

(73) Patentinhaber: **Bürger, Joachim**
**Curracloe-Kilmacoe, County Wexford (IE)**

(72) Erfinder: **Bürger, Joachim**
**Curracloe-Kilmacoe, County Wexford (IE)**

(74) Vertreter: **Weisse, Jürgen, Dipl.-Phys. et al**
**Patentanwälte**
**Dipl.-Phys. Jürgen Weisse**
**Dipl.-Chem. Dr. Rudolf Wolgast**
**Bökenbusch 41**
**42555 Velbert-Langenberg (DE)**

(56) Entgegenhaltungen:
**EP-A- 0 469 948          DE-A- 1 809 459**
**DE-A- 4 316 984**

## Beschreibung

### Technisches Gebiet

Die Erfindung betrifft ein Meßgerät nach dem Oberbegriff des Anspruchs 1 sowie ein Verfahren zur Messung der Profiltiefe eines Kraftfahrzeugreifens.

Das Profil von Kraftfahrzeugreifen ist sehr wesentlich für die Sicherheit. Über das Profil kann Regenwasser auf der Fahrbahn unter dem Reifen zur Seite abfließen, so daß es nicht zu einem Aufschwimmen des Reifens und Verlust der Bodenhaftung (Aquaplaning) kommt. Das ist besonders wichtig bei modernen, mit hoher Geschwindigkeit fahrenden Personenkraftwagen. In vielen Ländern ist daher eine Mindesttiefe des Profils gesetzlich vorgeschrieben (in Deutschland 1,6 mm). Schon bei einer Profiltiefe von unter 3,0 mm ist die Wasserverdrängung bei Regen auf nur 30% des Neureifenwertes verringert. Das Profil von Kraftfahrzeugreifen ist starkem Verschleiß unterworfen. Dieser Verschleiß ist aber für den Halter des Fahrzeugs schwer erkennbar. Die Profiltiefe wird allenfalls einmal in einer Kraftfahrzeugwerkstatt gemessen, wo Meßgeräte hierfür verfügbar sind.

### Zugrundeliegender Stand der Technik

Durch die DE 43 16 984 A1 ist ein Verfahren und eine Vorrichtung zur automatischen Ermittlung der Profiltiefe von Kraftfahrzeugreifen bekannt. Im Boden einer Meßstation ist eine teilweise lichtdurchlässige Meßplatte angeordnet. Unterhalb der Meßplatte befinden sich ein Meßkopf. Der Meßkopf weist einen Laser und einen bildauflösenden Sensor als Triangulationseinheit auf. Zur Messung der Profiltiefe eines Kraftfahrzeugreifens wird die Meßplatte von dem Reifen überrollt oder der Reifen auf der Meßplatte abgestellt. Der Laser erzeugt dann einen Lichtfleck auf der Profiloberfläche des Reifens. Durch den Sensor wird die Position des Lichtflecks beobachtet. Die Ausgangssignale des Sensors werden einer Auswerteeinheit übergeben, die das Maß des Reifenprofils ermittelt. Der Meßkopf ist an einem Schlitten angeordnet und quer zur Abrollrichtung des Reifens bewegbar.

Bei der in der DE 43 16 984 A1 beschriebenen Vorrichtung erfolgt die Messung des Reifenprofils zwangsläufig unter Last, wobei im Bereich der Aufstandfläche des Reifens die Noppen des Reifenprofils in Radialrichtung des Reifens zusammegedrückt werden. Um ein dadurch bedingtes verfälschtes Meßergebnis zu vermeiden wird der Laser so ausgerichtet, daß der Laserstrahl auf das Reifenprofil außerhalb der Aufstandsfläche des Reifens auftrifft.

Um das Reifenprofil auch bei verschmutzten Reifen ermitteln zu können, wird im Bereich der Meßplatte eine auf das Reifenprofil ausgerichtete Austrittsdüse für Wasser angeordnet, die das Reifenprofil vor oder während der Messung mit Wasser beaufschlagt. Weiterhin ist eine Selbstreinigungsanlage vorgesehen, welche die durch die Reinigung des Reifens verschmutzte Meßplatte reinigen soll.

Bei dieser automatischen Vorrichtung kann nicht gewährleistet werden, daß ein für das Reifenprofil repräsentativer Bereich des Reifens abgetastet wird. Um die Wahrscheinlichkeit einer repräsentativen Messung zu erhöhen, werden deshalb mehrere Meßplatten und Meßköpfe hintereinander in Abrollrichtung des Reifens vorgesehen.

Die DE-OS 1 809 459 beschreibt ein Verfahren und eine Vorrichtung zur automatischen Ermittlung der Profiltiefe von Kraftfahrzeugreifen im fließenden Verkehr. Das Meßprinzip ist ähnlich dem in der DE 43 16 984 A1 beschriebenen Meßprinzip. In der Straßenoberfläche wird eine schlitzförmige Öffnung vorgesehen, unter welchem die Meßanordnung in einer Grube angeordnet ist. Durch den zu messenden Reifen wird ein photoelektrischer Kontakt betätigt, welcher einen Elektronenblitz auslöst. Durch den Elektronenblitz wird ein schmales Lichtband erzeugt. Das Lichtband wird durch die schlitzförmige Öffnung hindurch scharf auf die Reifenoberfläche abgebildet. Durch das Profil der Reifenoberfläche wird das Lichtband als Stufenlinie reflektiert, wobei die Stufenhöhe proportional zu der Profiltiefe ist. Das stufenförmige Lichtbandbild wird durch ein Fernrohr und ein Kameraobjektiv vergrößert auf eine Photoschicht abgebildet. Ein Teil des abbildenden Lichtbündels wird durch einen halbdurchlässigen Spiegel auf eine Platte reflektiert, welche aus einem Raster von photoelektrischen Elementen besteht. Aus den Ausgangssignalen der photoelektrischen Elementen ermittelt ein elektronisches Auswertegerät die Stufenhöhen und damit die Profiltiefe.

Die EP 0 469 948 A1 beschreibt ebenfalls eine Vorrichtung zur automatischen Ermittlung der Profiltiefe von Kraftfahrzeugreifen im fließenden Verkehr. Auch hier wird von einem Laser ein Lichtfleck auf die Reifenoberfläche erzeugt und der Lichtfleck durch einen bildauflösenden Sensor beobachtet. Die Meßvorrichtung befindet sich unter der Straßenoberfläche. In der Straßenoberfläche ist eine durch ein Fenster abgedeckte Öffnung vorgesehen. Es sind mehrere Meßeinheiten hintereinander in Fahrtrichtung vorgesehen.

Bekannte mobile Meßgeräte zur Messung der Profiltiefe von geparkten Kraftfahrzeugreifen arbeiten mechanisch mit einem Meßdorn. Die DE-GM-7 640 078 beschreibt ein solches Meßgerät mit einem Führungskörper und einem darin verschiebbar gelagerten, in das Reifenprofil einsteckbaren, federbelasteten Tastfühler. Beim Aufsetzen des Meßgeräts auf den Reifen, ragt der Tastfühler in das Reifenprofil hinein. Wenn die Profiltiefe kleiner als einen vorgebbaren Wert ist, wird eine Lampe über den Tastfühler mit eine Batterie verbunden, so daß die Lampe aufleuchtet. Die DE-PS-2 722 137 und die DE-PS-3 827 456 zeigen ähnliche Meßgeräte, welche auf dem gleichen mechanischen Prinzip mit einem Meßdorn beruhen.

## Offenbarung der Erfindung

Der Erfindung liegt die Aufgabe zugrunde, ein verbessertes Verfahren und Meßgerät zur Messung der Profiltiefe von Kraftfahrzeugreifen zu schaffen, mittels welchen die Profiltiefe genau und zuverlässig gemessen werden können.

Speziell liegt der Erfindung die Aufgabe zugrunde, ein Meßgerät dieser Art zu schaffen, welche es gestattet, routinemäßig die Profile von Kraftfahrzeugreifen zu überwachen, beispielsweise durch Kontrolle der Profiltiefen an geparkten Fahrzeugen.

Erfindungsgemäß werden diese Aufgaben bzgl. des Meßgeräts durch die im kennzeichnenden Teil des Anspruchs 1 aufgeführten Merkmale und bzgl. des Verfahrens durch die in Anspruch 10 aufgeführten Merkmale gelöst.

Die Erfindung beruht auf der Erkenntnis, daß die Laserstrahlen zur Ermittlung des Reifenprofils von dem Reifenprofil ausreichend reflektiert werden, obwohl der Reifen schwarz ist, aus Gummi besteht und die Tiefe der Profilnuten im Verhältnis zu der Breite sehr groß ist.

Die Erfindung beruht auf der Erkenntnis, daß die Laserstrahlen zur Ermittlung des Reifenprofils von dem Reifenprofil ausreichend reflektiert werden, obwohl der Reifen schwarz ist, aus Gummi besteht und die Tiefe der Profilnuten im Verhältnis zu der Breite sehr groß ist.

Der Laser erzeugt einen Lichtfleck auf dem Grunde einer Profilnut des Reifenprofils. Wenn sich die Tiefe dieser Profilnut ändert, dann verlagert sich der Auftreffpunkt des schräg einfallenden Laserstrahls seitlich. Das liegt daran, daß der Lichtfleck "höher" liegt. Diese Verlagerung kann durch einen bildauflösenden Sensor, der im einfachsten Fall eine lineare Zeile von lichtempfindlichen Detektoren aufweist, erfaßt und in einen Tiefen-Meßwert umgesetzt werden.

Der Laser-Meßkopf wird über das Reifenprofil geführt. Dadurch können mehrere Profilnuten in einem Meßvorgang ausgemessen werden. Die einzelnen Meßwerte können dann so ausgewertet werden, daß einen einzigen Meßwert für den Reifen erzeugt wird, welcher für die relevante Profiltiefe aussagekräftig ist.

Das Meßgerät kann als mobile Einheit ausgebildet sein. Es ist dann vorteilhaft, wenn es mit einer Batterie und einem Drucker ausgestattet ist. Dabei können alle Komponenten der Signalverarbeitungsmittel, die Batterie und der Drucker in einem einzigen Gehäuse untergebracht sein. Es ist aber auch möglich, je nach Wunsch die Komponenten in verschiedenen Einheiten unterzubringen, beispielsweise den Laser-Meßkopf an einem Stab und Batterie und Drucker in einem Gehäuse, das entweder an einem Tragriemen getragen oder als Karre mit Rädern gezogen werden kann.

Der Laser-Meßkopf kann dann nacheinander an die Reifen eines Kraftfahrzeuges gehalten werden. Die Signal-verarbeitungs-Mittel liefern die Profiltiefe. Diese Profiltiefe wird mittels des Druckers ausgedruckt. Wenn das Meßgerät eine mobile Einheit ist, dann können auf einfache Weise die Reifen parkender Fahrzeuge kontrolliert und der Fahrzeughalter durch einen Ausdruck des Druckers auf eventuelle Defekte hingewiesen werden. Damit kann ein wesentlicher Beitrag zur Erhöhung der Verkehrssicherheit geleistet werden.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

## Kurze Beschreibung der Zeichnungen

Fig.1    ist eine Ansicht eines Ausführungsbeispiels eines mobilen Meßgeräts zur Messung der Profiltiefe von Kraftfahrzeugen.

Fig.2    zeigt das Meßgerät von Fig.1 mit abgenommener Haube, so daß Batterie und Drucker erkennbar sind.

Fig.3    ist eine perspektivische Darstellung und veranschaulicht den Einsatz des mobilen Meßgerätes von Fig.1 und 2 an einem geparkten Kraftfahrzeug.

Fig.4    zeigt einen Ausdruck, wie er von dem mobilen Meßgerät von Fig.1-3 geliefert wird.

Fig.5    ist eine schematische Darstellung und veranschaulicht die Wirkungsweise des Laser-Meßkopfes.

Fig.6    ist ein Diagramm und zeigt für den Laser-Meßkopf von Fig.5 die Tiefe der Profilnut als Funktion der Lage des auf dem Grund der Profilnut beobachteten, durch den Laser erzeugten Lichtfleckes.

Fig.7    ist ein Flußdiagramm und veranschaulicht den Ablauf der Messung der Reifenprofiltiefen mit einem mobilen Meßgerät nach der Erfindung.

Fig.8    ist ein Flußdiagramm und veranschaulicht die Datenauswertung bei der Messung der Reifenprofiltiefen.

Fig.9    ist eine Ansicht eines zweiten Ausführungsbeispiels eines mobilen Meßgeräts zur Messung der Profiltiefe der Reifen von Kraftfahrzeugen.

## Bevorzugte Ausführung der Erfindung

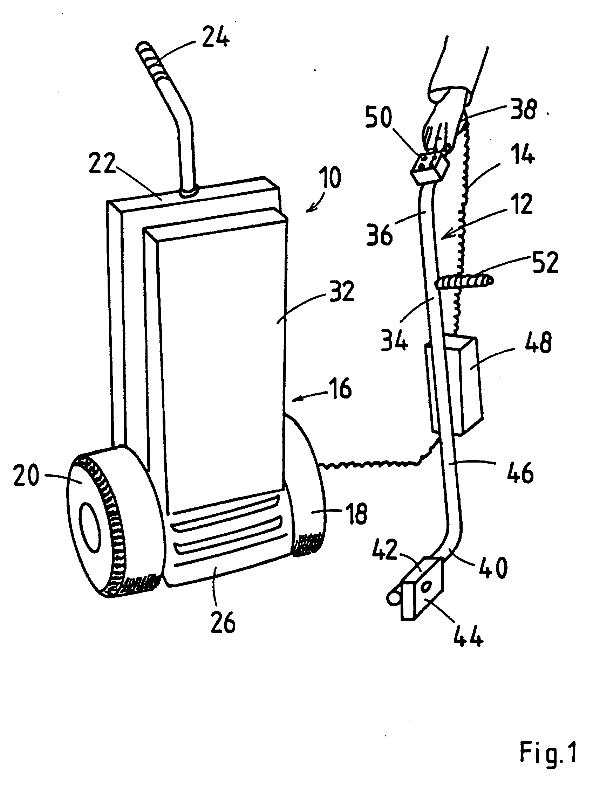

In Fig. 1 enthält das mobile Meßgerät einen Hauptteil 10 und einen Meßkopfteil 12. Der Meßkopfteil 12 ist mit dem Hauptteil 10 über ein Spiralkabel 14 verbunden.

Der Hauptteil 10 ist auf einer zweirädrigen Karre 16 montiert. Die Karre 16 weist zwei Räder 18 und 20, eine Rückwand 22 mit einem fest daran angebrachten Griff 24 und Stützen 26 auf. Die Karre 16 kann wie eine Sackkarre mit dem Griff 24 nach hinten in Fig.1 gekippt und mittels der Räder 18 und 20 verfahren werden. Die Karre 16 kann aber auch zum Abstellen nach vorn geschwenkt werden, so daß sie auf den Stützen 26 ruht.

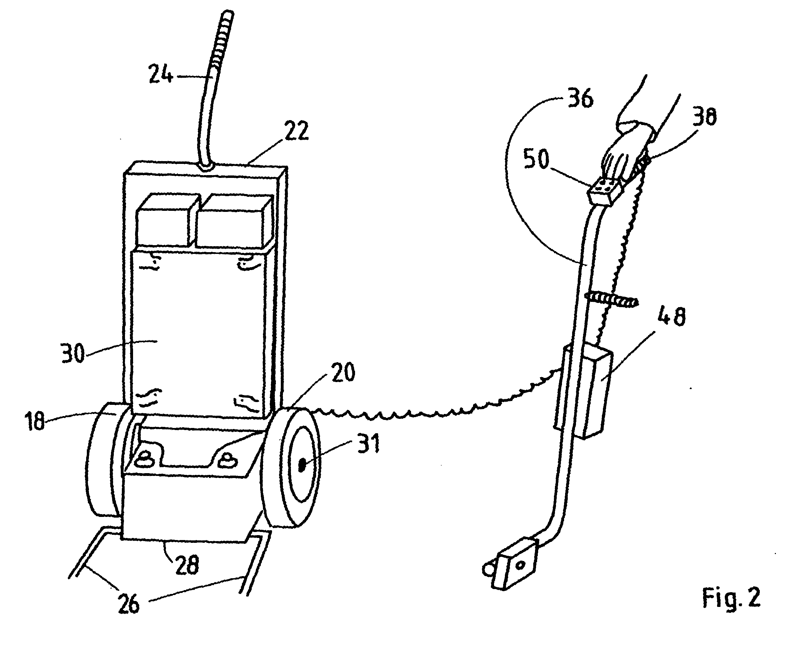

Der Hauptteil 10 enthält eine auslaufsichere Batterie 28 und einen Drucker 30 (Fig.2). Die Batterie 28 ist tiefliegend und mit dem Schwerpunkt vor der Achse 31 der Räder 18 und 20 angeordnet. Dadurch ist die gesamte Anordnung stabil. Die Karre 16 sucht sich, wenn der Griff losgelassen wird, auf den Stützen 26 abzustützen.

Oberhalb der auslaufsicheren Batterie 28 enthält der Hauptteil den Drucker 30. Der Drucker 30 ist zum Ausdrucken von Meß-Protokollen eingerichtet. Die Batterie 28 und der Drucker 30 sind durch eine Haube 32 abgedeckt, die in Fig.2 abgenommen aber aus Fig. 1 erkennbar ist. Die Haube 32 kann aus Kunststoff oder Metall hergestellt sein. Die Haube 32 weist einen seitlichen Ausgabeschlitz zur Ausgabe ausgedruckter Meß-Protokolle auf.

Der Meßkopfteil 12 enthält einen im wesentlichen z-förmigen Stab 34. An seinem normalerweise oberen Ende weist der Stab 34 ein unter einem stumpfen Winkel abgewinkeltes Handgriffende 36 auf. Das Handgriffende 36 bildet einen Handgriff 38. Das untere, "Meßkopfende" 40 des Stabes 34 ist nach der entgegengesetzten Seite wie das Handgriffende 36 unter einem stumpfen Winkel abgewinkelt, so daß es im wesentlichen parallel zu dem Handgriffende 36 verläuft. An dem Meßkopfende 40 sitzt ein Laser-Meßkopf 42. Der Laser-Meßkopf 42 kann mit seiner Seitenfläche 44 an einen Kraftfahrzeugreifen angesetzt werden. Der Laser-Meßkopf 42 enthält einen Laser, mit dessen Hilfe eine Messung der Profiltiefe des Reifens erfolgt.

An dem geraden Mittelteil 46 des Stabes 34 sitzt ein Steuer- und Signalübertragungseinheit 48. An dem Handgriffende 36 ist eine Bedieneinheit 50 mit vier Betätigungsgliedern angeordnet, über welche die Position des jeweils gemessenen Reifens des Kraftfahrzeuges eingebbar ist. Die Betätigungsglieder der Bedieneinheit 50 sind vier Drucktasten, wie aus Fig.1 ersichtlich. Weiterhin ist an dem Mittelteil 46 ein Handgriff 52 angebracht. Der Handgriff 52 erstreckt sich senkrecht zu dem Mittelteil 46 und im wesentlichen senkrecht zu der von Mittelteil 46, Handgriffende 36 und Meßkopfende 40 bestimmten Ebene.

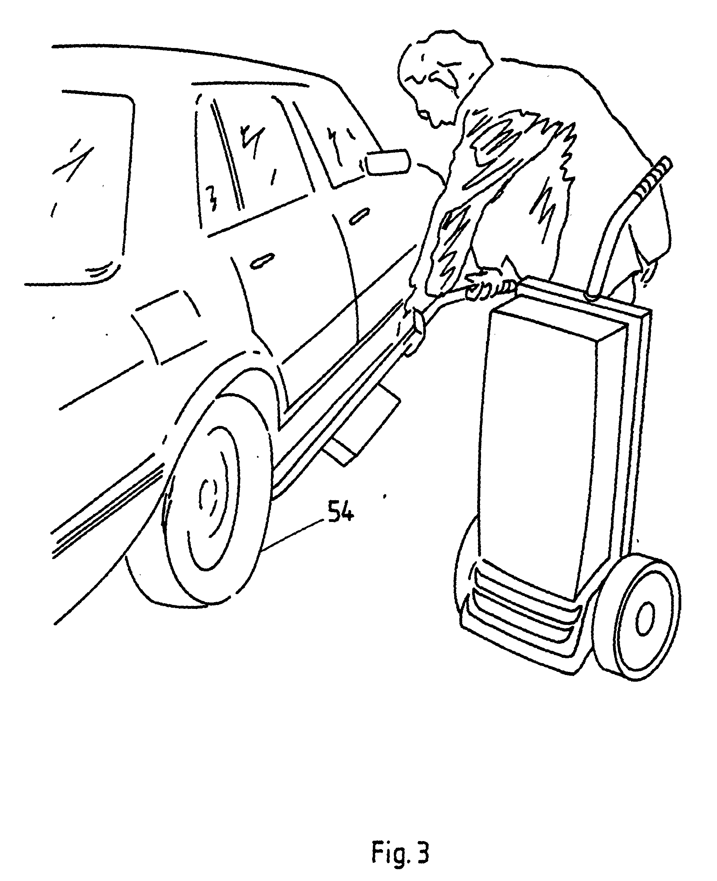

Fig.3 veranschaulicht den Einsatz eines Meßgerätes der vorliegenden Art zur Messung der Profiltiefe der Reifen eines geparkten Kraftfahrzeuges. Der Meßkopf 42 wird über das Profil eines Reifens 54 geführt. Dabei kann der Stab 34 an den Handgriffen 38 und 52 bequem geführt werden. Der Laser-Meßkopf ist so an dem Stab 34 angebracht, daß dieses Führen über den Reifen 54 bequem durchgeführt werden kann. Der Benutzer kann dabei aufrecht stehen bleiben. Die Messung wird in gleicher Weise an allen vier Reifen des Kraftfahrzeuges durchgeführt. An den vier Betätigungsgliedern der Bedieneinheit 50 wird eingegeben, welcher der vier Reifen jeweils gemessen wird.

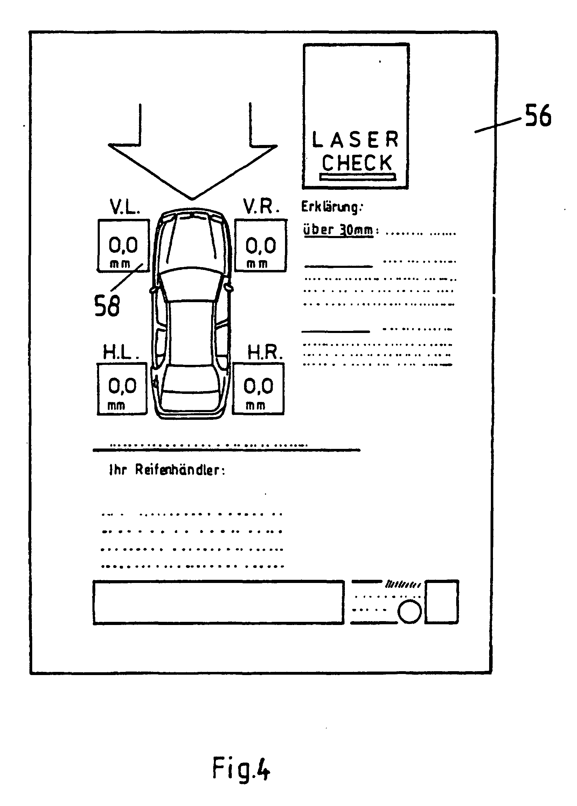

Fig.4 zeigt einen Ausdruck, wie er von dem beschriebenen Gerät geliefert wird. Ein Vordruck 56 enthält die Darstellung eines Kraftfahrzeuges mit vier Feldern 58. In die Felder 58 werden die für die vier Reifen gemessenen Werte der Profiltiefe von dem Drucker eingedruckt. Durch die Betätigungsglieder der Bedieneinheit 50 wird dem Drucker 30 vorgegeben, in welches dieser Felder 58 der Meßwert eingedruckt werden soll.

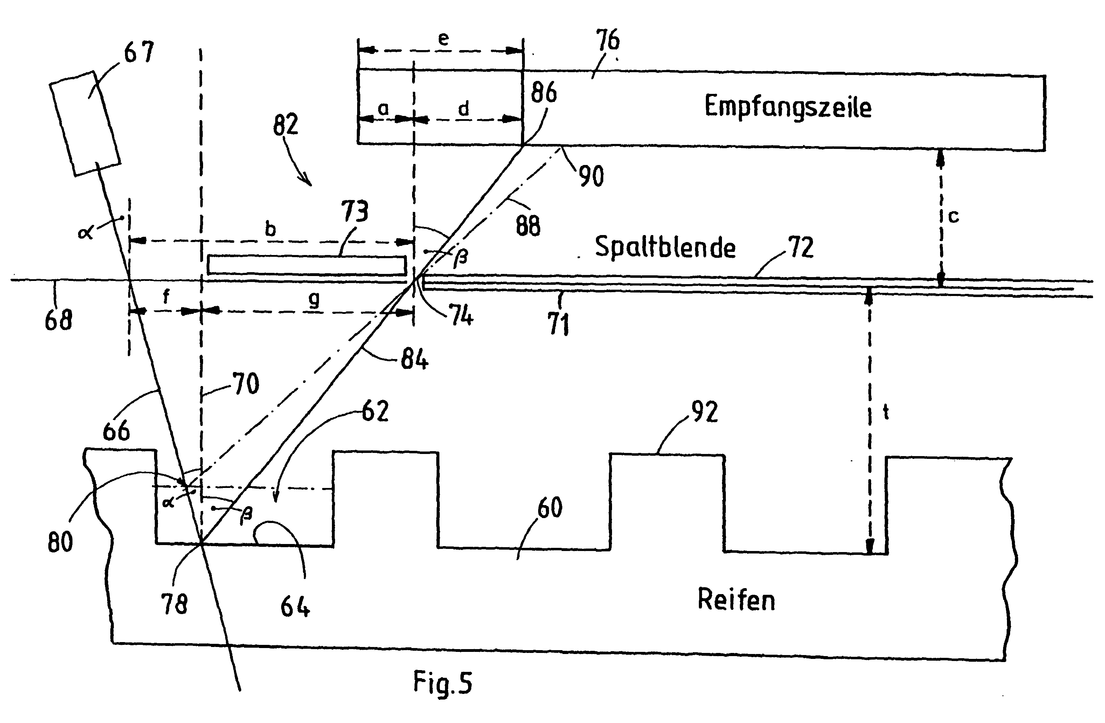

In der schematischen Fig.5 ist mit 60 ein Reifen angedeutet, der ein Reifenprofil mit Profilnuten 62 aufweist. Die Profilnuten 62 bilden einen Grund 64. Eine Referenzebene 68 wird durch die Oberfläche des Reifens zwischen den Profilnuten 62 definiert. Der Laser-Meßkopf 42 hält diese Referenzebene 68 in definiertem Abstand von der Oberfläche des Reifens. Der Laserstrahl 66 bildet mit der Normalen 70 zu der Referenzebene 68 und mit dem Grund 64 der Profilnut 62 einen Winkel a. Der Winkel a ist so gewählt, daß der Laserstrahl 66 jedenfalls bei bestimmten relativen Positionen von Meßkopf 42 und Reifen in eine Profilnut 62 bis zu deren Grund 64 eindringen kann, wie in Fig.5 dargestellt ist.

In der Referenzebene 68 ist eine Spaltblende 72 mit einem Spalt 74 angeordnet. Die gesamte Spaltblende 72 kann in einer Ebene liegen. Es ist jedoch vorteilhaft, wenn der in Fig.5 linke Teil 73 der Spaltblende 72 gegenüber dem rechten Teil 71 etwas nach oben versetzt angeordnet ist. Wenn die gesamte Spaltblende in einer Ebene liegt, verlieren Lichtstrahlen, welche von der Oberfläche des Reifens reflektiert werden, in einem sehr stumpfen Winkel durch den Spalt 74 gehen und auf Detektoren treffen, welche weit weg von dem Spalt 74 liegen, sehr viel Intensität, da die effektive Öffnung des Spaltes 74 für solche Lichtstrahlen sehr klein ist. Durch den vertikalen Versatz der Teile 71 und 73 wird dieses Problem behoben. Die effektive Öffnung des Spaltes 74 ist für schräg einfallende Lichtstrahlen dadurch vergrößert, ohne negative Auswirkung auf die Intensität von Lichtstrahlen, welche nahezu senkrecht durch den Spalt 74 treten.

Im Abstand hinter der Spaltblende 74 ist eine Zeile 76 von lichtempfindlichen Detektoren angeordnet. Die Zeile 76 liegt in einer den Laserstrahl 66 enthaltenden Ebene. Die Längsrichtung der Zeile 76 ist gekreuzt zu dem Spalt 74. Anders ausgedrückt: Der Laserstrahl 66 und die Zeile 76 definieren eine Ebene. Das ist die Papierebene in Fig.5. Der Spalt 74 erstreckt sich in der Referenzebene 68 senkrecht zu dieser Ebene.

Der Laserstrahl 66 erzeugt einen Lichtfleck 78 auf dem Grund 64 der Profilnut 62. Die seitliche Lage dieses Lichtfleckes 78 hängt von der Tiefe der Profilnut 62 ab. Wenn der Grund 64 der Profilnut 62 in der gestrichelt angedeuteten Höhe läge, dann ergäbe sich ein Lichtfleck im Punkt 80. Die Lage des Lichtfleckes wird von einem bildauflösenden Sensor 82 beobachtet. Dieser bildauflösender Sensor 82 ist hier von der Spaltblende 72 und der Zeile 76 von lichtempfindlichen Detektoren gebildet. Von dem diffus reflektierten Licht des Lichtfleckes 78 fällt ein Lichtstrahl 84 durch den Spalt 74 auf einen Detektor 86 der Zeile 76. Von einem Lichtfleck 80 würde ein Lichtstrahl 88 durch den Spalt 74 auf einen Detektor 90 der Zeile 76 fallen. Es ist ersichtlich, daß sowohl die seitliche Verlagerung des Lichtfleckes nach links in Fig.5 als auch die vertikale Verlagerung nach oben in Fig.5 im Sinne einer Verschwenkung des Lichtstrahls 84 bzw. 88 um den Spalt 74 im Uhrzeigersinn wirkt, so daß der Lichtstrahl einen weiter rechts in Fig. 5 liegenden Detektor der Zeile 76 trifft. Aus dem Bild des Lichtfleckes auf der Zeile von lichtempfindlichen Detektoren kann somit auf die Lage des Grundes 64 bezogen auf die Referenzebene 68 und damit auf die Tiefe der Profilnut 62 geschlossen werden.

Quantitativ ergibt sich folgendes:

Es bezeichnen:

t     den Abstand des Grundes 64 der Profilnut 62 von der Referenzebene,

$\alpha$     den Winkel zwischen Laserstrahl 66 und der Normalen 70 zur Referenzebene 68,

$\beta$     den Winkel zwischen dem Lichtstrahl 84 und der Normalen 70 zur Referenzebene 68,

a     den in Fig.5 horizontalen Abstand zwischen dem Anfang der Zeile 76 von lichtempfindlichen Detektoren und dem Spalt 74,

b     den in Fig.5 horizontalen Abstand zwischen dem Durchstoßpunkt des Laserstrahls 66 durch die Referenzebene 68 und dem Spalt 74,

c     den in Fig.5 vertikalen Abstand zwischen der Referenzebene 68 und der oberhalb der Referenzebene angeordneten Zeile 76,

d     den in Fig.5 horizontalen Abstand zwischen dem Spalt 74 und dem Auftreffpunkt des Lichtstrahls 84 auf der Zeile 76 von lichtempfindlichen Detektoren,

e     den Abstand des Auftreffpunktes des Lichtstrahls 84 auf der Zeile 76 von dem Anfang der Zeile 76,

f     den in Fig.5 horizontalen Abstand zwischen dem Durchstoßpunkt des Laserstrahls 66 durch die Referenzebene 68 und dem Lichtfleck 78 und

g     den in Fig.5 horizontalen Abstand zwischen dem Lichtfleck 78 und dem Spalt 74.

Es gelten dann folgende Beziehungen:

$$(1) \qquad e = a + d$$

$$(2) \qquad b = f + g$$

$$(3) \qquad f = t \tan\alpha$$

$$(4) \qquad g = t \tan\beta$$

$$(5) \qquad d = c \tan\beta$$

Durch Einsetzen von Gleichung (3) und (4) in Gleichung (2) ergibt sich:

$$b = t \tan\alpha + t \tan\beta$$

$$b/t = \tan\alpha + \tan\beta$$

$$\tan\beta = b/t - \tan\alpha$$

$$(6) \qquad \beta = \operatorname{arctg}(b/t - \tan\alpha)$$

Durch Einsetzen von Gleichung (5) in Gleichung (1) ergibt sich

$$(7) \qquad e = a + c \tan\beta$$

Setzt man Gleichung (6) in Gleichung (7) ein, dann erhält man:

$$e = a + c \tan(\operatorname{arctg}(b/t - \tan\alpha))$$

$$e = a + c(b/t - \tan\alpha)$$

$$(e-a)/c = b/t - \tan\alpha$$

$$(e-a)/c + \tan\alpha = b/t$$

$$(8) \qquad t = b/((e-a)/c + \tan\alpha)$$

Das stellt die gesuchte Tiefe der Profilnut 62 (bezogen auf die Referenzebene 68) als Funktion der Lage des in der Zeile 76 den Lichtfleck 78 beobachtenden Detektors 86 dar. Die Größen a, b und c sind Apparatekonstanten. Die Tiefe "t" ist um so kleiner, je größer (e-a) ist, d.h. je weiter rechts von dem Spalt 74 in Fig.5 der von dem Lichtstrahl 84 getroffene Detektor der Zeile 76 liegt. Das ist anhand des gestrichelten Lichtstrahls 88 in Fig.5 unmittelbar einsichtig. Die Tiefe ist bei gleicher Lage des "belichteten" Detektors, z.B. 86 um so größer, je größer "c" ist. Wenn man die Zeile 76 mit dem Detektor 86 parallel nach oben in Fig.5 verschiebt, also den Abstand "c" zwischen Zeile 76 und Referenzebene 68 größer macht, dann schwenkt der Lichtstrahl 84 entgegen dem Uhrzeigersinn um den Spalt 74. Der Lichtstrahl 84 schneidet daher den Laserstrahl 66 weiter unten in Fig.5. Schließlich ist die gemessene Tiefe "t" bei im übrigen unveränderter Geometrie kleiner, wenn α größer wird, der Laserstrahl 66 also um seinen Durchstoßpunkt durch die Referenzebene 68 entgegen dem Uhrzeigersinn in Fig.5 verschwenkt wird.

Es haben sich folgende Werte für die Apparatekonstanten als vorteilhaft erwiesen:

$\tan \alpha =$ 0,286 <=> $\alpha$ = 15°
a = 0,2 mm
b = 12 mm
c = 5 mm

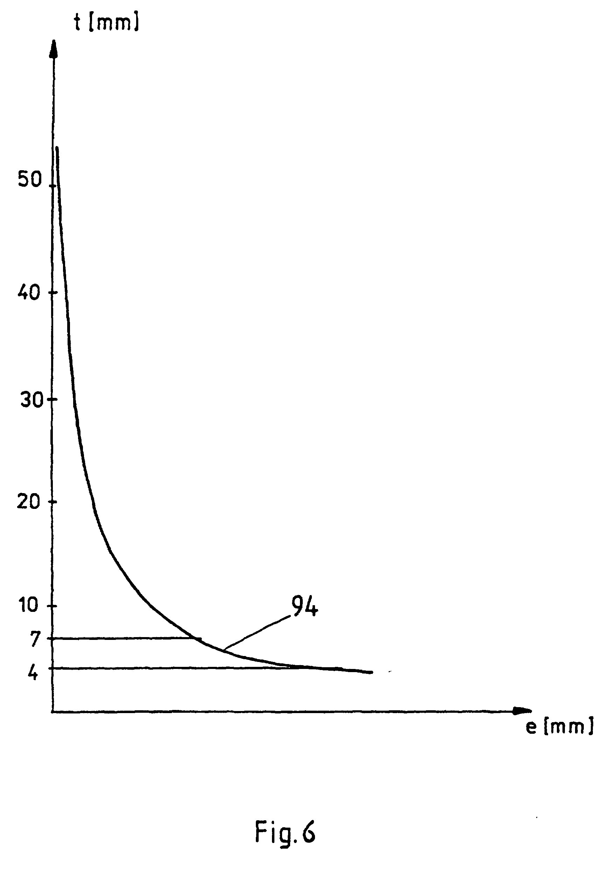

Mit diesen Werten ergibt sich für die Abhängigkeit der Tiefe "t" von der durch den Sensor 82 beobachteten Lage des Lichtflecks 78 auf dem Grund 64 der Profilnut 62, nämlich der Strecke "e" in der die Zeile 76 enthaltenden Bildebene, das in Fig.6 dargestellte Diagramm. Dieses Diagramm stellt die Funktion von Gleichung (8) dar.

Der Laser-Meßkopf ist so ausgebildet, daß die Referenzebene 68 etwa in einem Abstand von 4 mm von der zwischen den Profilnuten liegenden Oberfläche 92 des Reifens liegt. Die kritische Profiltiefe liegt zwischen 0 und 3 mm. Der Meßbereich, in welchem der Laser-Meßkopf 42 mit hoher Auflösung arbeiten muß, liegt daher zwischen 4 und 7 mm. Das ist der stark ausgezogene Bereich 94 in dem Diagramm von Fig.6. Man erkennt, daß in diesem Bereich einer kleinen Änderung der Tiefe "t" eine recht große Änderung der Lage "e" des von dem Lichtstrahl 84 getroffen, lichtempfindlichen Detektors zugeordnet ist. Die Zeile 76 von lichtempfindlichen Detektoren enthält etwa 8 Detektoren pro Millimeter, so daß 8 Punkte pro Millimeter aufgelöst werden können. Das ergibt eine theoretische Tiefenauflösung von etwa 0,1 bis 0,2 mm

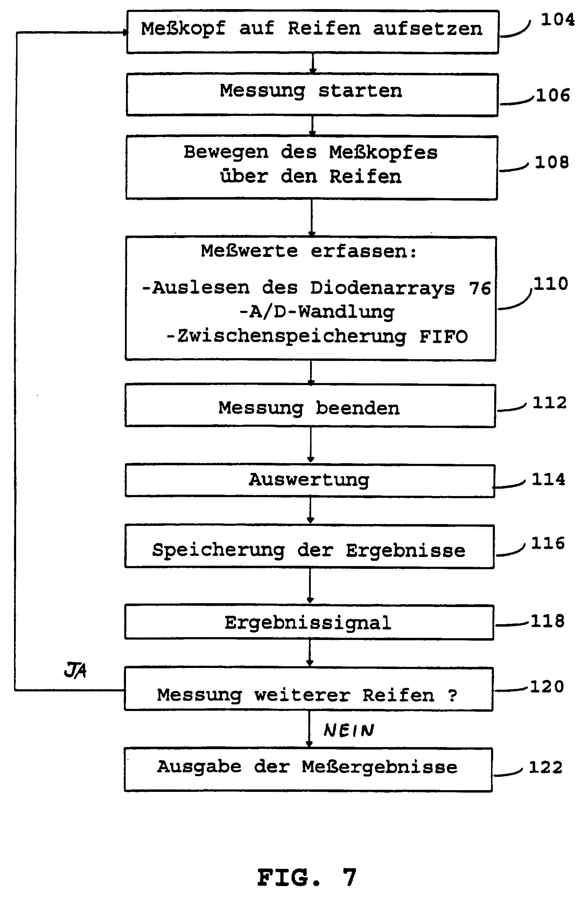

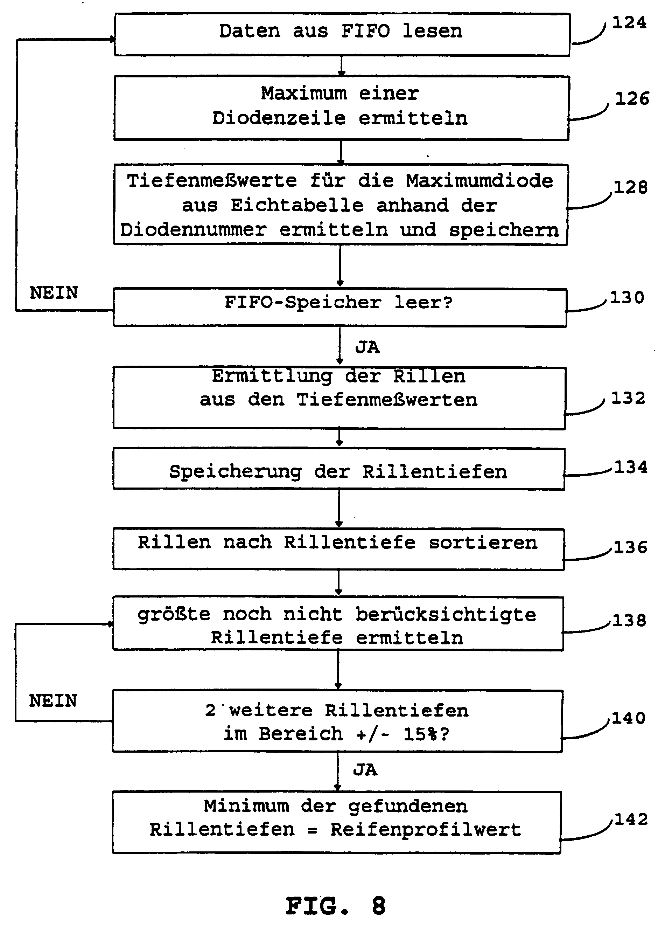

Bei der Durchführung der Messung wird der Laser-Meßkopf 42 über das Profil geführt, und es werden Maxima der gemessenen Tiefen als Tiefen der Profilnuten 62 des Reifenprofils bestimmt. Die Vorgehensweise soll nun anhand von Fig.7 und 8 beschrieben werden:

Zunächst wird der Laser-Meßkopf 42 auf dem Reifen 54 (Fig.3) aufgesetzt. Dies ist durch Block 104 in Fig.7 dargestellt. Der Laser-Meßkopf 42 wird vorzugsweise auf einem Rand des Reifens aufgesetzt. Die Messung wird gestartet (Block 106), indem eine der vier Drucktasten der Bedieneinheit 50 (Fig.1) gedrückt wird. Durch die Betätigung der Drucktaste wird der Laser 67 (Fig.5) eingeschaltet und ein akustisches und optisches Startsignal ausgegeben, durch welche die Bedienungsperson erfährt, daß die Messung ordnungsgemäß stattfindet. Der Laser-Meßkopf 42 wird dann quer über das Reifenprofil geführt (Block 108), wobei die Meßwerte "e" (Fig.5) erfaßt werden (Block 110). Das erfolgt dadurch, daß die lichtempfindlichen Detektoren (z.B. Photodioden) der Zeile 76 (z.B. Diodenarray mit 128 Dioden) die Intensität des von der jeweiligen Diode getroffenen Lichts in einer zu der jeweiligen Lichtintensität proportionalen Spannung umwandelt. Durch die gewisse Divergenz der Strahlen hinter dem Spalt 74 (Fig.5) wird im allgemeinen nicht nur eine Diode mit Licht beaufschlagt, sondern auch benachbarte Dioden. Diese Spannungswerte werden seriell mit einer bestimmten Taktfrequenz T ausgelesen und durch einen A/D-Wandler in digitale Werte (8 Bit) umgewandelt. Diese digitale Werte werden in einem FIFO-Speicher (256 kB) gespeichert.

Nachdem der Laser-Meßkopf 42 ein oder mehrere Male quer über das Reifenprofil geführt worden ist, wird die Messung beendet, indem die gedrückte Drucktaste der Bedieneinheit 50 wieder losgelassen wird (Block 112). Die Meßwerte werden dann ausgewertet. Das ist durch Block 114 dargestellt und wird später anhand von Fig.8 näher beschrieben. Die Ergebnisse der Auswertung werden gespeichert (Block 116). Durch ein optisches und akustisches Ergebnissignal (Block 118) erfährt die Bedienungsperson, ob die Messung erfolgreich war. Die Bedienungsperson entscheidet jetzt, ob weitere Reifenprofile gemessen (Block 120) oder die Meßergebnisse ausgegeben werden sollen (Block 122). Die Ausgabe der Meßergebnisse erfolgt durch Betätigung eines Druckknopfes, durch welchen der Drucker 30 (Fig.2) aktiviert wird.

Die durch Block 114 in Fig.7 dargestellte Auswertung der Meßwerte ist in Fig.8 näher beschrieben. Als erstes werden die bei dem ersten Taktsignal in den FIFO-Speicher eingelesenen Daten (Block 110, Fig.7) ausgelesen (Block 124). Der Höchste Wert dieser Daten wird ermittelt (Block 126). Die entsprechende Adresse im FIFO-Speicher entspricht die Nummer der Diode, welche bei der entsprechenden Messung mit der höchsten Intensität des Laserlichtes getroffen wurde. Jetzt wird der dieser Diode entsprechende Tiefenmeßwert t (Fig.5) ermittelt. Dies ist durch Block 128 dargestellt. Die Diodennummer wird mit einer in einem Speicher gepeicherten Eichtabelle verglichen. Aus der Eichtabelle erhält man dann den entsprechenden Tiefenmeßwert. Dieser Tiefenmeßwert wird gespeichert. Es erfolgt eine Abfrage, ob der FIFO-Speicher leer ist (Block 130). Wenn der FIFO-Speicher nicht leer ist, werden die bei dem nächsten Taktsignal in den FIFO-Speicher eingelesenen Daten ausgelesen (Block 124) und entsprechend Block 126 bis 130 verfahren. Wenn der FIFO-Speicher leer ist, dann werden die gespeicherten Tiefenmeßwerte ausgewertet. Dies ist durch Block 132 dargestellt. Die Auswertung besteht darin, daß die Rillen des Reifens aus den Tiefenmeßwerten ermittelt werden. Dabei entsprechen Tifenmeßwerte von 0 mm die Oberfläche des Reifens. Wenn eine bestimmte Anzahl (beispielsweise 10) von nacheinander gespeicherten Tiefenmeßwerte sich von 0 mm unterscheiden, dann werden diese und die folgenden Tiefenmeßwerte, bis wieder der Tiefenmeßwert 0 mm auftritt, einer Rille zugeordnet. Auf diese Weise erhält man eine bestimmte Anzahl von Rillen, welche davon abhängt, wieviele Rillen mit dem Laser-Meßkopf bei der Messung erfaßt worden sind.

Die Tiefen der einzelnen Rillen wird folgendermaßen ermittelt: Ausgehend von dem höchten Tiefenmeßwert in einer bestimmten Rille wird ermittelt, wieviele weitere Tiefenmeßwerte sich innerhalb einer Grenze von beispielsweise +/- 15% dieses Tiefenmeßwertes befinden. Falls mehr als 5 solche Tiefenmeßwerte vorhanden sind, wird der kleinste dieser Tiefenmeßwerte als tatsächliche Rillentiefe definiert. Falls weniger als 5 solche Tiefenmeßwerte vorhanden sind, wird von dem nächst höheren Tiefenmeßwert ausgegangen und in der gleichen Weise verfahren, bis die Rillentiefe erhalten wird.

Die so ermittelte Anzahl der Rillen und die entsprechenden Rillentiefen werden gespeichert (Block 134). Jetzt erfolgt eine Bewertung der Rillentiefen. Zunächst werden die Rillen nach Rillentiefe sortiert (Block 136). Dann wird, ähnlich wie bei der Ermittlung der Tiefen der einzelnen Rillen, von der größten Rillentiefe ausgegangen (Block 138) und ermittelt, wieviele weitere Rillentiefen sich innerhalb einer Grenze von beispielsweise +/- 15% dieser Rillentiefen befinden. Falls mindestens zwei weitere Rillentiefen innerhalb dieser Grenze liegen (Block 140), wird der kleinste dieser Rillentiefen als tatsächlicher Reifenprofilwert definiert (Block 142). Falls weniger als zwei solche Rillentiefen gefunden werden, wird von der nächst größeren Rillentiefe ausgegangen (Block 138) und in der gleichen Weise verfahren, bis der Reifenprofilwert erhalten wird.

Die Parameter a und a, b, c könnten gemessen und direkt einjustiert werden. Die Parameter können jedoch auch durch Eichung bestimmt werden. Zu diesem Zweck werden vier Teile mit bekannten, unterschiedlichen Profiltiefen vermessen. Zu jedem bekannten "t" wird das zugehörige "e" bestimmt. Daraus ergeben sich dann vier Gleichungen von der Form von Gleichung (8) mit jeweils bekanntem "t" und bekanntem "e". Aus diesen vier Gleichungen können die vier Parameter a, a, b und c bestimmt werden.

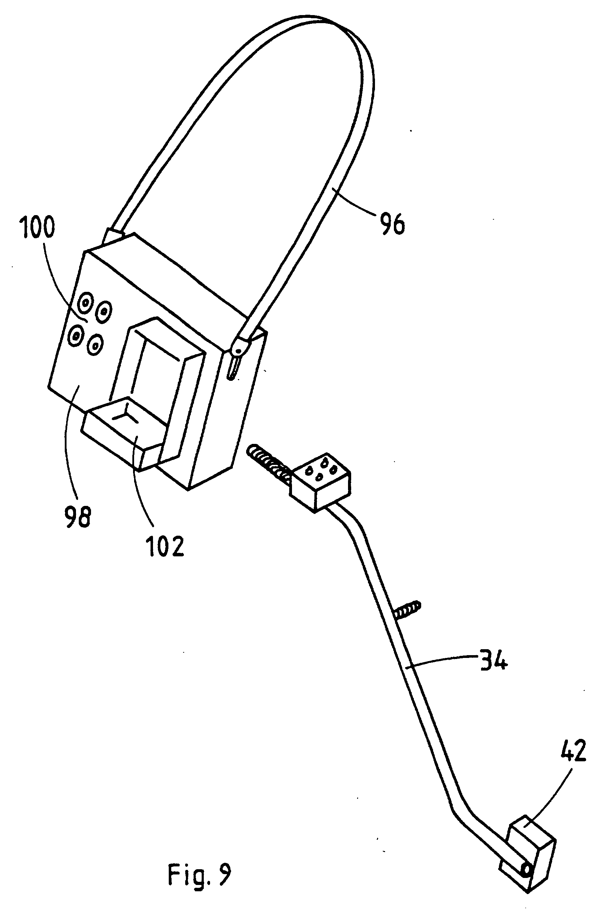

Bei einem in Fig.9 dargestellten, zweiten Ausführungsbeispiel eines erfindungsgemäßen mobilen Meßgeräts befindet sich Drucker, Batterie und die gesamte Elektronik des Meßgerätes in einem mittels eines Tragriemen 96 tragbaren Gehäuse 98. Der Stab 34 und der Meßkopf 42 ist ähnlich ausgebildet wie bei dem in Fig.1 dargestellten Ausführungsbeispiel. In diesem zweiten Ausführungsbeispiel ist jedoch die Steuer- und Signalübertragungseinheit 48 (Fig.1) nicht an dem Stab 34 angebracht, sondern in dem Gehäuse 98 untergebracht. Eine solche kompaktere Ausführung des erfindungsgemäßen Meßgeräts ist insbesondere dadurch möglich, daß eine kleinere Batterie und einen kleineren Drucker gewählt wird. An der Frontseite des tragbaren Gehäuses 98 sind befinden sich Bedienungsknöpfe 100 sowie eine Druckauswerfschacht 102. Die Funktionsweise des zweiten Ausführungsbeispiels der Erfindung entspsricht der des ersten Ausführungsbeispiels.

Weiterhin kann das mobile Meßgerät mit einem Bildschirm ausgerüstet sein. Die Meßwerte können dann überprüft werden, bevor sie ausgedruckt werden.

Das erfindungsgemäße Meßgerät kann auch als stationäres Meßgerät ausgebildet sein. Es kann in schon bestehenden Bremsprüfanlagen oder Waschstraßen eingesetzt werden. Die Stromversorgung erfolgt über das Versorgungsnetz. Die Meßwerte der Reifenprofiltiefe können in schon für die Bremsprüfung bestehende Meßprotokolle integriert werden.

**Patentansprüche**

1.  Meßgerät zur Messung der Profiltiefe eines Kraftfahrzeugreifens (54), enthaltend

    (a) einen Laser (67) zur Erzeugung eines Laserstrahls (66), welche auf den Grund (64) des Reifenprofils zur Erzeugung eines Lichtflecks (78) gerichtet wird,

    (b) einen bildauflösenden Sensor (82), durch welchen die Position des Lichtflecks (78) beobachtbar ist,

    (c) Bildverarbeitungsmittel, durch welche aus Positionsdaten (e) des bildauflösenden Sensors (82) ein Meßwert (t) für die Profiltiefe eines oder mehrerer Profilnuten (62) des Reifenprofils erzeugbar ist,

    (d) ein Gehäuse als Laser-Meßkopf (42), in welchem der Laser (67) und der bildauflösende Sensor (82) gemeinsam angeordnet sind, wobei

    (e) der Laser-Meßkopf (42) eine Anlagefläche (44) aufweist, mit welcher der Laser-Meßkopf (42) an dem Kraftfahrzeugreifen (54) anlegbar ist, so daß der Laser (67) und der bildauflösende Sensor (82) in definierter Lage zu dem Kraftfahrzeugreifen (54) positionierbar sind, **dadurch gekennzeichnet, daß**

    (f) der Laser (67) und der bildauflösende Sensor (82) bzgl. der Anlagefläche (44) fest angeordnet sind, und

(g) der Laser-Meßkopf (42) eine tragbare Einheit bildet, welche manuell über das Reifenprofil führbar ist.

2. Meßgerät nach Anspruch 1, **gekennzeichnet durch**

    (a) einen Drucker (30) zum Ausdrucken von Ausgangsdaten nach Maßgabe der Profiltiefe, und

    (b) eine Batterie (28) zur Stromversorgung des Lasers (67), des bildauflösenden Sensors (82) und des Druckers (30).

3. Meßgerät nach Anspruch 2, **dadurch gekennzeichnet, daß** der Drucker (30) und die Batterie (28) in einem gemeinsamen Gehäuse (10;98) angeordnet sind.

4. Meßgerät nach Anspruch 3, **dadurch gekennzeichnet, daß** alle Komponenten der Signalverarbeitungsmittel, die Batterie (28) und der Drucker (28) in einem gemeinsamen Gehäuse (98) untergebracht sind.

5. Meßgerät nach einem der Ansprüche 2 bis 4, **dadurch gekennzeichnet, daß** der Laser-Meßkopf (42) über eine flexible Verbindung (14) mit dem Gehäuse (10;98) verbunden ist.

6. Meßgerät nach einem der Ansprüche 1 bis 5, **dadurch gekennzeichnet, daß** der Laser-Meßkopf (42) am Ende eines Stabes (34) angebracht ist, der ein bequemes Heranführen des Laser-Meßkopfes (42) an die Reifen (54) eines geparkten Kraftfahrzeuges gestattet.

7. Meßgerät nach Anspruch 6, **dadurch gekennzeichnet, daß** der Stab (34) z-förmig ausgebildet ist und ein abgewinkeltes Handgriffende (36), einen langen Mittelteil (46) und ein etwa parallel zu dem Handgriffende (36) abgewinkeltes, den Laser-Meßkopf (42) tragendes Meßkopfende (40) aufweist.

8. Meßgerät nach einem der Ansprüche 1 bis 7, **dadurch gekennzeichnet, daß** der bildauflösende Sensor (82) eine Zeile (76) von lichtempfindlichen Detektoren, die in einer den Laserstrahl (66) enthaltenden Ebene verläuft, und abbildende Mittel (72,73,74) aufweist, welche den auf dem Grund (64) des Reifenprofils gebildeten Lichtfleck (78) auf der Zeile (76) abbilden.

9. Meßgerät nach Anspruch 8, **dadurch gekennzeichnet, daß** die abbildenden Mittel von einer Spaltblende (72,73) mit einem gekreuzt zu der Zeile (76) verlaufenden Spalt (74) gebildet sind.

10. Verfahren zur Messung der Profiltiefe eines Kraftfahrzeugreifens (54) mittels eines einen Laser (67), einen bildauflösenden Sensor (82) und eine Anlagefläche (44) enthaltenden, tragbaren Laser-Meßkopfes (42), wobei

    (a) der Laser-Meßkopf (42) manuell an dem Kraftfahrzeugreifen (54) angelegt wird, so daß eine Referenzfläche (68) eine definierte Lage zu dem Reifen (54) einnimmt,

    (b) der Laserstrahl (66) des Lasers (67) durch die Referenzfläche (68) hindurch unter einem Winkel ($\alpha$) auf den Grund (64) des Reifenprofils geleitet wird, so daß auf dem Grund (64) des Reifenprofils ein Lichtfleck (78) erzeugt wird,

    (c) durch den bildauflösenden Sensor (82) die Position (e) des Lichtflecks (78) beobachtet und daraus ein Maß (t) für die Tiefe des Reifenprofils gewonnen wird, und

    (d) der Laser-Meßkopf (42) manuell über das Reifenprofil geführt wird und Meßwerte für mehrere Reifenrillen erzeugt werden, aus welchen ein Maß für das Reifenprofil bestimmt wird.

11. Verfahren nach Anspruch 10, **dadurch gekennzeichnet, daß** der Zusammenhang zwischen der Tiefe des Reifenprofils und der von dem bildauflösenden Sensor (82) bestimmten Lage des Lichtflecks (78) durch Eichung anhand von Profilen bekannter Profiltiefen bestimmt wird.

## Claims

1. Measuring device for measuring the tread depth of a motor vehicle tyre (54), comprising

    (a) a laser (67) for generating a laser beam (66), which is directed to the bottom (64) of the tyre tread so as to produce a light spot (78),

    (b) an image resolving sensor (82) arranged to observe the position of the light spot (78),

    (c) image processing means adapted to provide, from position data (e) of the image resolving sensor (82), a measuring value (t) of the tread depth of one or several tread grooves (62) of the tyre tread,

    (d) a housing as laser measuring head (42), in which the laser (67) and the image resolving sensor (82) are commonly arranged,

(e) the laser measuring head (42) comprising an engagement surface (44) by means of which the laser measuring head (42) is adapted to be put against the motor vehicle tyre (54), such that the laser (67) and the image resolving sensor (82) are adapted to be positioned in a well-defined position relative to the motor vehicle tyre (54),
**characterized in that**

(f) the laser (67) and the image resolving sensor (82) are fixedly arranged relative to the engagement surface (44), and

(g) the laser measuring head (42) forms a portable unit adapted to be guided manually over the tyre tread.

2. Measuring device as set forth in claim 1, **characterized by**

(a) a printer (30) for printing output data in accordance with the tread depth,

(b) a battery (28) for power supply of the laser (67), the image resolving sensor (82) and the printer (30).

3. Measuring device as set forth in claim 2, **characterized in that** the printer (30) and the battery (28) are accommodated within a common housing (10; 98).

4. Measuring device as set forth in claim 3, **characterized in that** all components of the signal processing means, the battery (28) and the printer (28) are accommodated within a common housing (98).

5. Measuring device as set forth in anyone of the claims 2 to 4, **characterized in that** the laser measuring head (42) is connected to the housing (10;98) through a flexible connection (14).

6. Measuring device as set forth in anyone of the claims 1 to 5, **characterized in that** the laser measuring head (42) is attached to the end of a rod (34), which permits the laser measuring head (42) to be conveniently approached to the tyres (54) of a parked motor vehicle.

7. Measuring device as set forth in claim 6, **characterized in that** rod (34) is z-shaped and has a bent-off handle end (36), a long median portion (46) and a measuring head end (40) bent-off substantially parallel to the handle end (36) and carrying the laser measuring head (42).

8. Measuring device as set forth in anyone of the claims I to 7, **characterized in that** the image resolving sensor (82) comprises an array (76) of light-sensitive detectors which extends in a plane containing the laser beam (66), and further comprises imaging means (72,73,74) for imaging, on the array (76), the light spot (78) formed on the bottom (64) of the tyre tread.

9. Measuring device as set forth claim 8, **characterized in that** the imaging means consist of a slit light stop (72,73) having a slit (74) extending crosswise to the array (76).

10. Method of measuring the tread depth of a motor vehicle tyre (54) by means of a potable laser measuring head (42) comprising a laser (67), an image resolving sensor (82) and an engagement surface (44),

(a) the laser measuring head (42) being put manually against the motor vehicle tyre (54) such that a reference surface (68) adopts a well-defined position relative to the tyre (54),

(b) the laser beam (66) of the laser (67) being directed through the reference surface (68) to the bottom (64) of the tyre tread at an angle ($\alpha$) to generate a light spot (78) on the bottom (64) of the tyre tread,

(c) the position (e) of the light spot (78) being observed by the image resolving sensor (82) and a measure (t) of the depth of the tyre tread being derived therefrom, and

(d) the laser measuring head (42) being guided manually over the tyre tread and measuring values being generated for several tyre grooves, from which a measure of the tyre tread is determined.

11. Method as set forth in claim 10, **characterized in that** the relation between the depth of the tyre tread and the position of the light spot (78) as determined by the image resolving sensor (82) is determined by calibration on the basis of treads of known tread depths.

**Revendications**

1. Appareil de mesure destiné à mesurer la profondeur de la sculpture d'un pneumatique (54) pour véhicules automobiles, comprenant

(a) un laser (67) destiné à générer un rayon laser (66) qui est orienté sur le fond (64) d'une sculpture de pneumatique afin de générer un spot lumineux (78),

(b) un capteur à résolution d'images (82) grâce auquel la position du spot lumineux (78) est susceptible d'être observée,

(c) des moyens de traitement d'images grâce auxquels une valeur de mesure (t) pour la profondeur de la sculpture d'une ou de plusieurs rainures profilées (62) de la sculpture du pneumatique est susceptible d'être générée à partir de données de position (e) du capteur à résolution d'images (82),

(d) un boîtier en tant que tête de mesure laser (42) dans lequel le laser (67) et le capteur à résolution d'images (82) sont disposés ensemble,

(e) la tête de mesure laser (42) présentant une surface d'appui (44) à l'aide de laquelle la tête de mesure laser (42) est susceptible d'être placée contre le pneumatique (54) pour véhicules automobiles de telle façon que le laser (67) et le capteur à résolution d'images (82) sont susceptibles d'être positionnés dans une position définie par rapport au pneumatique (54) pour véhicules automobiles,

      **caractérisé par le fait que**

(f) le laser (67) et le capteur à résolution d'images (82) sont disposés fixement par rapport à la surface d'appui (44) et

(g) la tête de mesure laser (42) forme une unité susceptible d'être portée qui est susceptible d'être guidée manuellement sur la sculpture du pneumatique.

**2.** Appareil de mesure selon la revendication 1, **caractérisé par**

(a) une imprimante (30) destinée à imprimer des données de sortie en fonction de la profondeur de la sculpture, et

(b) une batterie (28) destinée à alimenter en courant électrique le laser (67), le capteur à résolution d'images (82) et l'imprimante (30).

**3.** Appareil de mesure selon la revendication 2, **caractérisé par le fait que** l'imprimante (30) et la batterie (28) sont disposées dans un boîtier commun (10; 98).

**4.** Appareil de mesure selon la revendication 3, **caractérisé par le fait que** tous les composants des moyens de traitement de signaux, la batterie (28) et l'imprimante (30) sont logés dans un boîtier commun (98).

**5.** Appareil de mesure selon l'une des revendications 2 à 4, **caractérisé par le fait que** la tête de mesure laser (42) est connectée au boîtier (10;98) par l'intermédiaire d'une connexion flexible (14).

**6.** Appareil de mesure selon l'une des revendications 1 à 5, **caractérisé par le fait que** la tête de mesure laser (42) est placée à l'extrémité d'un manche (34) permettant de guider aisément la tête de mesure laser (42) sur le pneumatique (54) d'un véhicule automobile à l'arrêt.

**7.** Appareil de mesure selon la revendication 6, **caractérisé par le fait que** le manche (34) est configuré en forme de Z et présente une extrémité de poignée (36) pliée, un long élément médian (46) et une extrémité de tête de mesure (40) pliée à peu près parallèlement par rapport à l'extrémité de poignée (36) et portant la tête de mesure laser (42).

**8.** Appareil de mesure d'après l'une des revendications 1 à 7, **caractérisé par le fait que** le capteur à résolution d'images (82) présente une ligne (76) de détecteurs photosensibles s'étendant dans un plan comprenant le rayon laser (66) ainsi que des moyens reproducteurs (72,73,74) reproduisant sur la ligne (76) le spot lumineux (78) formé sur le fond (64) de la sculpture du pneumatique.

**9.** Appareil de mesure d'après la revendication 8, **caractérisé par le fait que** les moyens reproducteurs sont formés par un diaphragme à fente (72,73) muni d'une fente (74) s'étendant en diagonale par rapport à la ligne (76).

**10.** Procédé destiné à mesurer la profondeur de la sculpture d'un pneumatique (54) pour véhicules automobiles au moyen d'une tête de mesure laser (42) susceptible d'être portée et comprenant un laser (67), un capteur à résolution d'images (82) et une surface d'appui (44),

(a) la tête de mesure laser (42) étant placée manuellement contre le pneumatique (54) pour véhicules automobiles de telle façon qu'une surface de référence (68) prend une position définie par rapport au pneumatique (54),

(b) le rayon laser (66) du laser (67) étant guidé à travers la surface de référence (68) sous un angle ($\alpha$) sur le fond (64) de la sculpture du pneumatique de telle façon qu'un spot lumineux (78) est généré sur le fond (64) de la sculpture du pneumatique,

(c) la position (e) du spot lumineux (78) étant observée par le capteur à résolution d'images (82) et une dimension (t) de la profondeur de la sculpture du pneumatique étant déduite à partir de cela, et

(d) la tête de mesure laser (42) étant guidée manuellement sur la sculpture du pneumatique et des valeurs de mesure pour plusieurs rainures du pneumatique à partir desquelles une dimension de la sculpture du pneumatique étant générées.

11. procédé selon la revendication 10, **caractérisé par le fait que** la relation entre la profondeur de la sculpture du pneumatique et la position du spot lumineux (78) déterminée par le capteur à résolution d'images (82) est déterminée par étalonnage à l'aide de sculptures de profondeurs de sculpture connues.

Fig.1

Fig. 2

54

Fig. 3

Fig.4

Empfangszeile

Spaltblende

Reifen

Fig.5

Fig. 6

**FIG. 7**

```
┌─────────────────────────────────────────┐
│         Daten aus FIFO lesen             │──124
└─────────────────────────────────────────┘
                    │
                    ▼
┌─────────────────────────────────────────┐
│            Maximum einer                 │──126
│         Diodenzeile ermitteln            │
└─────────────────────────────────────────┘
                    │
                    ▼
┌─────────────────────────────────────────┐
│   Tiefenmeßwerte für die Maximumdiode    │──128
│       aus Eichtabelle anhand der         │
│  Diodennummer ermitteln und speichern    │
└─────────────────────────────────────────┘
                    │
    NEIN            ▼
┌─────────────────────────────────────────┐
│          FIFO-Speicher leer?             │──130
└─────────────────────────────────────────┘
                    │ JA
                    ▼
┌─────────────────────────────────────────┐
│         Ermittlung der Rillen            │──132
│        aus den Tiefenmeßwerten           │
└─────────────────────────────────────────┘
                    │
                    ▼
┌─────────────────────────────────────────┐
│       Speicherung der Rillentiefen       │──134
└─────────────────────────────────────────┘
                    │
                    ▼
┌─────────────────────────────────────────┐
│     Rillen nach Rillentiefe sortieren    │──136
└─────────────────────────────────────────┘
                    │
                    ▼
┌─────────────────────────────────────────┐
│    größte noch nicht berücksichtigte     │──138
│         Rillentiefe ermitteln            │
└─────────────────────────────────────────┘
                    │
    NEIN            ▼
┌─────────────────────────────────────────┐
│        2 weitere Rillentiefen            │──140
│         im Bereich +/- 15%?              │
└─────────────────────────────────────────┘
                    │ JA
                    ▼
┌─────────────────────────────────────────┐
│        Minimum der gefundenen            │──142
│    Rillentiefen = Reifenprofilwert       │
└─────────────────────────────────────────┘
```

**FIG. 8**

Fig. 9